# EUROPEAN PATENT APPLICATION

(11) **EP 2 104 063 A1**
(43) Date of publication of application: **23.09.2009**
(21) Application number: 08153034.7
(22) Date of filing: 19.03.2008
(51) Int. Cl.: G06Q 20/00, G06Q 30/00

(54) **Method and system for completing a transaction over a network**

(71) Applicant: Intius AB, 411 17 Göteborg (SE)
(72) Inventor: Mathiesen Öhman, Alexander, 422 49 HISINGS BACKA (SE); Lövbrand, Anders, 917 31 DOROTEA (SE)
(74) Representative: Edlund, Fabian

(57) **Abstract**

A method and system for completing a transaction between a user and merchant over a network connecting a client provided with a browser operated by the user, a content server, and a payment server. The method comprises requesting a content (web page) from the content server, identifying designated code portions containing an identification of a offer from a merchant, adapting the content in response to the designated code portions, receiving a user input to the browser selecting the offer, in response to the user input, and communicating to the payment server the offer identification and an identification of the user. In the payment server, details of the offer and payment details of the user are retrieved from a database, and payment is effected using the details, and a purchase confirmation is sent to the merchant, enabling delivery according to the offer.

Accordingly, through this method and system, a user does not need to engage in a purchasing process directly with the merchant.

## Description

### Technical field

The present invention relates to transactions performed over a network environment, such as the Internet.

### Background

Conventionally, a user wishing to purchase a product or service marketed online will be required to visit the web-site of the merchant, and engage in a purchase process with the merchant's web-shop. A variety of such systems exist, for example based on a shopping-cart model where the user will first select a number of products, and then perform a "check-out procedure" during which he will provide payment details, delivery address, etc.

Attempts have been made to simplify this model, most notably to simplify, or eliminate, the check-out procedure. For example, document US 5,960,411 describes how the purchase can be performed by one single input (one click), by storing all required delivery and payment details in a user profile that is stored on the client and is accessible to the merchant site.

Additionally, there are issues with security. The handling of payment and delivery details in many conventional systems do not fulfill the required security and integrity standards. In order to provide a more secure trading environment, technology has been developed that allows a third party to handle the transaction between a buyer and a seller.

For example, WO 2007/062185 describes a system that provides a client computer with additional functionality, allowing a user to visit different merchant sites and use the same payment server. An example of such a system is the PayPal ® system by eBay.

US2008/0010148 describes a system that facilitates for a buyer to complete a purchase on-line, by actively placing advertisements for products or services selected as suitable for the user on available areas of a web page. The advertisements may include links to merchant sites, offering the selected products or services.

However, conventional solutions for buying products or services on the Internet still require the user to visit a merchant site, and also requires the user to engage in a purchase process at the merchant, typically including a shopping cart or equivalent system.

A drawback with such technology is therefore that the user is forced to use different interfaces and different purchasing processes at different sites. This makes Internet based shopping (e-commerce) complicated and as a result the full potential of this marketplace has not been fully exploited.

### Summary of the invention

It is an object of the present invention to simplify the process of purchasing a product or service offered by a merchant over a network. A specific object is to enable a user to complete a purchase without communicating directly with the merchant site. According to some embodiments of the present invention, the user does not even visit the merchant site.

According to a first aspect of the invention, this and other objects are achieved by a method for completing a transaction between a user and merchant over a network connecting a client provided with a browser operated by the user, a content server, and a payment server. The method comprises requesting, using the browser, a content (web page) from the content server, identifying designated code portions included in the content, the code portions containing an identification of a offer from a merchant, adapting the content in response to the designated code portions, to include an indication of the offer responsive to a user input, receiving a user input to the browser selecting the offer, in response to the user input, communicating from the browser to the payment server the offer identification and an identification of the user, in the payment server, retrieving details of the offer and payment details of the user from a database, effecting payment of the offer using the details, and communicating a purchase confirmation to the merchant, the confirmation including information enabling delivery of the offer.

According to the present invention, the payment server stores not only payment and delivery details of each user, but also information about offers made by merchants. Further, the browser uses a feature specific module (e.g. a plug-in) to scan content, e.g. a visited web site, for code portions including an identification of an offer, and in response to finding such a code portion indicate a clickable area to the user. After an action from the user (e.g. a click) it will be sufficient to communicate with the payment server in order to complete a purchase. Accordingly, through this method and system, a user does not need to engage in a purchasing process directly with the merchant.

According to one embodiment, the feature specific module is further adapted to send the offer identification to the payment server, and to receive from the payment server details related to the offer, the details being used in the step of adapting the display of content

Through this process, the user can be provided with more information about the offer than is not included in the designated code portion. The designated code portion does therefore not have to be included in a merchant site, but can be included in any web site or other content requested by the browser. In other words, the user will not even have to visit the merchant site in order to complete a purchase.

### Brief description of the drawings

These and other aspects of the present invention will now be described in more detail with reference to the appended drawings, illustrating currently preferred embodiment in a non-restricting manner.
Figure 1 is a schematic drawing of a client, a payment server, and a content server according to an embodiment of the present invention.
Figure 2 is a flowchart of a method according to an embodiment of the present invention.
Figure 3 is an example of a web page adapted to include a "buy now" button.

### Detailed description of preferred embodiments

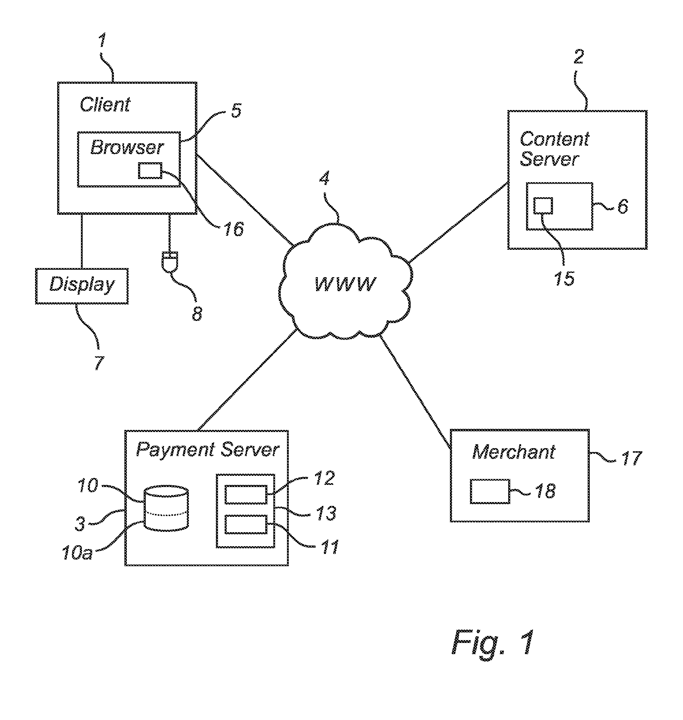

Figure 1 shows an example of a network environment including a client 1, a content server 2 and a payment server 3 according to an embodiment of the present invention.

The client 1 is connected to a network 4, such as the Internet, and is provided with a suitable browser 5 software enabling a user to access content provided by one or several content servers connected to the network. When content, e.g. a web page 6 in the form of a mark-up language file stored on the content server 2, is requested by the client 1, the browser 5 displays the content on a user interface, e.g. a display 7. Using a suitable input device, such as a mouse 8, the user can interact with the displayed content.

The payment server 3 is also connected to the network, and provided with a database 10 storing a set of user IDs, each associated with user purchase data required for performing a purchase. For example, such user purchase data can include the delivery address and payment details of a user. The payment details may be a credit card number, a bank account number, or a number of a cash account maintained by the server itself.

According to the present invention, the database 10 further comprises a portion 10a storing a set of sale offer IDs, each associated with details of a sale offer made by a merchant. The products may be physically deliverable, such as books, CDs, etc, or may be electronically deliverable on-line, such as software, digital content, on-line streaming, etc. The services may also be physically or electronically deliverable, and may include subscriptions of software updates, etc. The stored details may include an identification and description of a product or service, quality options, price, delivery options, expected delivery time, etc.

The payment server 3 further runs software 11, including a database manager 12 adapted to manage the database 10, and a communication interface 13 adapted to communicate with over the network in a manner described below.

The content provided by the content provider 2 is further adapted to include a designated code portion identifying one of the offers stored in the payment server. In the presently described embodiment, the code portion is a tag 15 included in the mark-up language web page 6. Optionally, the tag can further include information about the identified offer, e.g. selected parts of the details stored in the payment server database 10a.

The client 2 is further provided with a feature specific software module, for example in the form of a plug-in 16 or add-on for the browser 5. The plug-in is adapted to scan any requested content, such as the web page 6 provided by the content server 2, during or after download to the client, in order to identify any tags 15.

There are various ways to enable a browser, or browser plug-in, to cooperate with tags in a requested web page. An example of such a tag is given below:

```
       <a href="orginal_buy_link.html"
       rel="unitrader-id:12345678901234">Buy this
       product</a>
```

In this example, the plug-in 16 is adapted to identify the existence of a "unitrader-ID".

The browser plug-in 16 is further adapted to communicate with the interface 13 in the payment server 3. The communication may be provided with suitable security features, such as encryption. The communication may be performed using standard protocols, but is preferably performed using a specific protocol, enhancing security and speed. In particular, the plug-in 16 is adapted to send a user ID and an offer ID to the payment server 3, in order to enable the payment server 3 to complete a transaction.

Returning to the payment server 3, the communication interface 13 is further adapted to communicate in a suitable manner with the merchants providing the offers stored in the database 10a. For a merchant having a server 17 connected to the network 4, such communication may include email, http-requests, or any other electronic messaging. If preferred, the merchant server 17 may be provided with a feature specific software 18, and adapted to communicate with the payment server in a similar fashion as with the client browser, using a specific protocol.

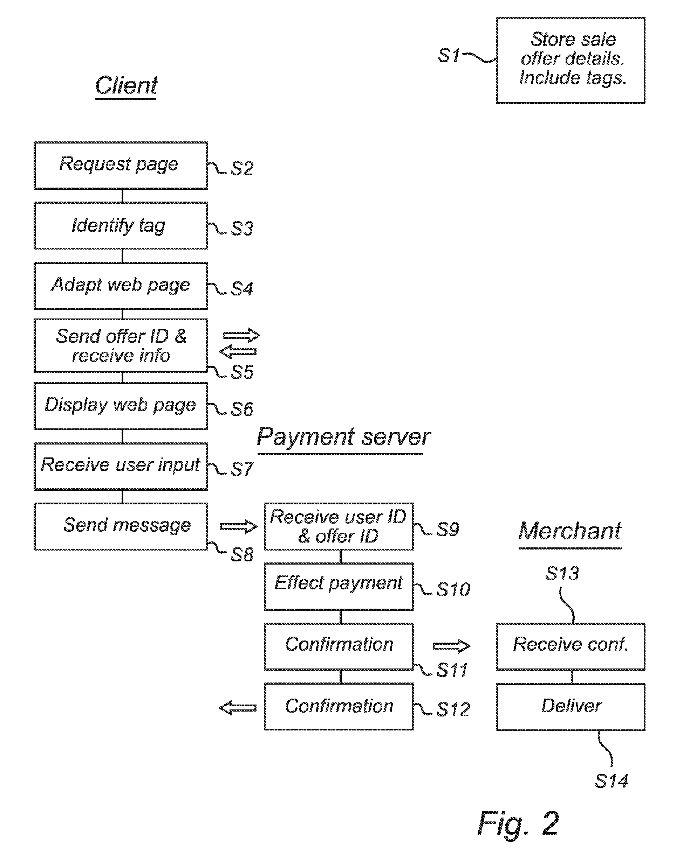

Figure 2 shows a flow chart of a method according to an embodiment of the invention. A process according to an embodiment of the invention will now be described with reference to figures 1 and 2.

During a first initiating step S1, the payment server stores details of a set of offers made by one or several merchants in the database 10a. Each set of offer details is associated with an offer identifier in the database. Further, identification of selected offers are included in sale offer tags 15 in web pages 6 provided by content providers 2 connected to the Internet 4.

As the user accesses the Internet, content requested by the browser, e.g. a specific web page, is downloaded to the client in step S2.

In step S3, the browser plug-in scans the requested web page, as it is downloaded to the client, and identifies any sale offer tags 5. For each identified tag, the plug-in adapts the web page to reflect the identified offer in step S4 to include one or several indications of available offers.

The web page should preferably also include details related to the offer, required by a user to determine whether the user wishes to accept the offer or not, e.g. a picture of an offered product, its price, etc. This is typically the case if the tag is included in a merchant web page, e.g. an on-line store.

However, according to one embodiment, the tag can be included in a non-merchant web site, that typically has no information about the offer that is made. In such a case, the tag itself can provide such information, that may be included in the web page by the browser plug-in during the adaptation of the page. Such a procedure will however require more information to be stored in the tag, potentially leading to increased download time, which may be undesired by the content provider.

For this purpose, the tag 15 can further be adapted to bring the browser 5 to communicate with the interface 13 in the payment server 3, in order to obtain information about the offer. For this purpose, in the presently described embodiment, the browser plug-in 16 in step S5 communicates with the payment server 3 using a specific protocol, and sends the offer identifier identified in the tag and receives the required information. The browser plug-in can then adapt the web page using the received information.

The plug-in 16 further adapts the web page to include an area responsive to user input, e.g. a clickable "buy now" button, to allow the user to indicate a decision to accept the offer.

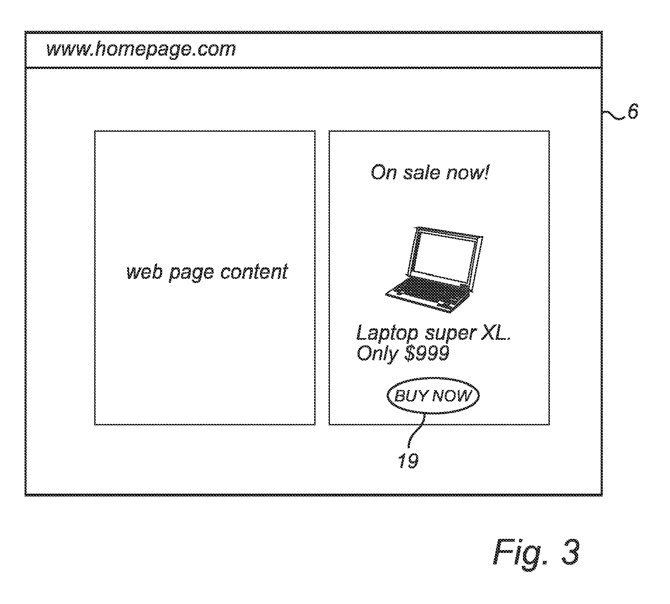

After adaptation of the web page, the browser 5 in step S6 displays the web page 6 on the user interface 7 (see figure 3). In step S7, the user provides input using the input device 8, e.g. by clicking on the "buy now" button 19. In response to a user input indicating an accept of the offer, the browser plug-in 16 in step S8 communicates with the payment server 3, and sends a user ID and the offer ID of the offer accepted by the user.

In step S9, the payment server receives the user ID and offer ID. In response to this, the software 11 in the payment server effects payment of the accepted offer in step S10, using payment data associated with the identified user, and stored in the database 10. As mentioned above, payment can be effected by debiting a specified credit card, a bank account, or a cash account, in a manner known per se. The payment server includes all necessary software and hardware for completing payment, such as e.g. means to communicate with a banking system. According to one embodiment, the payment server administrates a cash account specifically adapted for transactions performed using a method described herein.

After effecting the payment, the payment server 3 interface 13 sends a confirmation message to the merchant from which the identified offer originates, confirming that payment of the offer has been effected (step S11), and that delivery should take place. Additionally, the payment server 3 software 13 may send a confirmation message to the client, indicating that payment has been effected, and that delivery from the merchant should be expected (step S12).

The merchant server receives the message (step S13), and initiates a process of delivering the product or service (step S14).

In the following, a few examples of possible offers and delivery processes will be given.

### Physical product

If the transaction is a purchase of a physical product (e.g. a book, CD, etc), the user is provided with information about the product in a vicinity of the "buy now" button. Clicking on the "buy now" button completes a payment transaction in step S10 using the payment details in database 10. The message in step S11 can be a regular email or similar message, containing an identification of the product that has been purchased, a confirmation (receipt) of payment, and delivery details such as a postal address retrieved from the database 10. This message enables the merchant to deliver the product in step S14, using e.g. a delivery service. The payment server 3 will typically also send a confirmation of the purchase to the user. Alternatively, or additionally, a confirmation may be sent by the merchant to the user. In the latter case, such a confirmation may include details of delivery, such as expected delivery date.

### Digital content

If the product is a digital product to be delivered electronically, such as a file with digital content, or a software, the message in step S11 does not include a physical delivery address, but an electronic address, such as an email address. The product can then be emailed to the user in step S14. Alternatively, the merchant sends an URL and an access code to the user, enabling the user to access and download the digital product over the Internet.

Of course, in case of a smaller file, such as a plug-in for an existing software, the download process may be an automatic push-process. In that case, the electronic address provided by the payment server in step S11 may simply be the IP address of the client, to enable the merchant to initiate the push process.

### Streaming content

If the transaction is a purchase of on-line streaming content, such as video or audio content, e.g. a movie, or a TV or radio broadcast, the "buy now" button is preferably presented in connection to a suitable media player. In principle, the media player may be present on the web page 6 or be included in the code portion forming the tag 15. However, according to a preferred embodiment, the browser plug-in 16 inserts a suitable media player into the web page 6 as a result of the communication with the payment server 3 in step S5. The payment server 3 also provides the plug-in 16 with an URL enabling the media player to access a secure site providing the offered streaming content. In a manner known per se, the secure site is arranged to only perform streaming in response to requests originating from accepted IP-addresses. The media player will therefore not begin to receive streaming content, but be in "idle" state.

Clicking on the "buy now" button in step S7 will again complete a payment in step S10 using the payment details in the database 10. In this case, the message sent to the merchant in step S11 can include an identification of the content that has been purchased, and the IP-address of the user. The delivery in step S14 can now simply include authorizing the user IP address to receive the purchased content, thereby activating the "idle" streaming, and initiating a streaming process from the merchant server.

As the media player has already requested the offered steaming content from the content provider, the message in step S11 may not require an identification of the purchased content. However, in a case where the offer has several options, such as different quality levels or transmission rates, this can be indicated to the merchant, to ensure that the user receives a delivery corresponding to the effected payment.

In a manner known per se, the streaming in step S14 may be performed by receiving two data streams from two separate locations, and combining these streams in the browser or browser plug-in. Unauthorized copying of the streamed content is thereby made more difficult.

The person skilled in the art realizes that the present invention by no means is limited to the preferred embodiments described above. On the contrary, many modifications and variations are possible within the scope of the appended claims. For example, the content is not restricted to web pages 6, or even mark-up language files, but may be any types of content requested by the client. Further, the designated code portions may be have various form, and are not restricted to mark-up language tags 15.

## Claims

1. A method for completing a transaction between a user and merchant in a network environment connecting a client provided with a browser operated by the user, a content server, and a payment server, said method comprising the steps of:
requesting, using said browser, a content from said content server,
identifying designated code portions included in said content, said code portions containing an identification of an offer from a merchant,
adapting said content in response to said designated code portions, to include an indication of said offer responsive to a user input,
receiving a user input to said browser selecting said offer,
in response to said user input, communicating from said browser to said payment server said offer identification and an identification of said user,
in said payment server, retrieving details of said offer and payment details of said user from a database, effecting payment using said details, and communicating a purchase confirmation to said merchant, said confirmation including information enabling delivery according to said offer.

2. A method according to claim 1, wherein said step of adapting the display of content is preceded by the steps of:
sending, from said browser to said payment server, said offer identification, and
receiving, from said payment server to said browser, details related to said offer, said details being used in said step of adapting the display of content.

3. The method according to claim 1, wherein said payment details stored in said payment server comprises at least one of a credit card number, a bank account number and a cash account number.

4. The method according to claim 1, wherein said purchase confirmation includes at least one of an email address, a postal address, an IP address.

5. The method according to claim 1, wherein said offer is an offer to purchase a streaming content, and said content is adapted to include a media player provided with an URL to a site providing said streaming content.

6. A system for completing a transaction between a user and merchant, comprising:
a client connected to a network environment, including:
browser software adapted to request a content from a content server connected to said network, identify designated code portions included in said content, said code portions containing an identification of an offer from a merchant, adapt said content in response to said designated code portions, to include an indication of said offer responsive to a user input, receive a user input to said browser selecting said offer, and, in response to said user input, communicate from said browser to said payment server said offer identification and an identification of said user; and
a payment server connected to said network, including
a data base adapted to store details of said offer and payment details of said user, and
software adapted to receive said offer identification and said user identification, to effect payment using said details, and to communicate a purchase confirmation to said merchant, said confirmation including information enabling delivery according to said offer.

7. A system according to claim 6, wherein the browser software is further adapted to send said offer identification to said payment server, receive details related to said offer from said payment server, and use said details in said step of adapting the display of content.

8. The system according to claim 6, wherein said payment details stored in said payment server comprises at least one of a credit card number, a bank account number and a cash account number.

9. The system according to claim 6, wherein said purchase confirmation includes at least one of an email address, a postal address, an IP address.

10. The system according to claim 6, wherein said offer is an offer to purchase a streaming content, and said browser software is adapted to adapt said content to include a media player provided with an URL to a site providing said streaming content.
